# EUROPÄISCHE PATENTANMELDUNG

(11) **EP 1 609 953 A1**
(43) Veröffentlichungstag der Anmeldung: **28.12.2005**
(21) Anmeldenummer: 04014769.6
(22) Anmeldetag: 24.06.2004
(51) Int. Cl.: F01D 11/12, F01D 21/04, F04D 29/16

(54) **Montageverfahren und damit zusammengestellte Strömungsmaschine**

(71) Anmelder: BorgWarner Inc., Auburn Hills, MI 48326-2872 (US)
(72) Erfinder: Richter, Bernd, 67742 Lauterecken (DE)
(74) Vertreter: Balsters, Robert

(57) **Zusammenfassung**

Bei einem Montageverfahren zum Zusammenbauen einer Strömungsmaschine, insbesondere eines Turboladers (1), wird ein Rotor (4) in einem Lagergehäuse (2) drehbar gelagert und ein dem Rotor (4) zugewandtes durchströmbares Gehäuse (6) am Lagergehäuse (2) befestigt. Um eine Leistungserhöhung zu erzielen ist das durchströmbare Gehäuse (6) in einem dem Rotor zugewandten Bereich der Innenfläche mit einer Beschichtung (7) versehen. Der Rotor (4) schleift beim Zusammenbringen des Lagergehäuses (2) und des durchströmbaren Gehäuses (6) von der Beschichtung (7) des durchströmbaren Gehäuses (6) eine Schicht ab. Das beim Montieren durchgeführte Abschleifen mit dem Rotor (4) gewährleistet mit Sicherheit eine gewünschte Spaltfreiheit. Dabei wird bei den verschiedenen Gehäusen (6) unterschiedlich viel von der Beschichtung (7) abgeschliffen. Dieses Abschleifen muss nicht in einem getrennten Arbeitsschritt durchgeführt werden, sondern kann bei einem ohnehin nötigen Montageschritt mit kleinem Aufwand erzielt werden.

## Beschreibung

Die Erfindung bezieht sich auf ein Montageverfahren zum Zusammensetzen einer Strömungsmaschine, insbesondere eines Turboladers, nach dem Oberbegriff des Anspruches 1 und um eine damit zusammengestellte Strömungsmaschinen, insbesondere Turbolader, gemäß dem Oberbegriff des Anspruches 7. Strömungsmaschinen, wie Turbolader und Sekundärluftverdichter, umfassen Gehäuse, darin angeordnete drehbare Teile und Kanäle, die von einem Strömungsmedium durchströmt werden. Schaufelelemente der drehenden Teile wirken mit dem Strömungsmedium zusammen. Ein Turbolader umfasst jeweils einen Turbinenbereich, wo aus dem Motor austretendes Heißgas einen Turbinenrotor antreibt, und einen Verdichterbereich, wo zugeführte Luft von einem Verdichterrotor verdichtet bzw. angetrieben wird.

Zur Optimierung der Leistungsfähigkeit von Strömungsmaschinen mit drehenden Schaufelelementen, insbesondere Turboladern, wird der Spalt zwischen den vorstehenden Kanten der drehenden Schaufelelemente und dem Gehäuse minimiert. Aus der Schrift US 5 185 217 (DE 690 10 122 T2) ist eine Lösung bekannt, bei welcher am Gehäuse eines Turboladers eine vom drehenden Teil abreibbare Beschichtung angeordnet ist, wobei die Beschichtung im Betrieb teilweise abgerieben wird. Die richtige Wahl des Beschichtungsmaterials und das exakte Auftragen sind sehr aufwändig. Bei zu großen Schichtdicken besteht die Gefahr, dass die Strömungsmaschine nicht anläuft, weil das drehende Teil an der Beschichtung des Gehäuses festsitzt.

Um die Anlaufsicherheit auch bei den auftretenden Fertigungs-Streuungen zu gewährleisten, muss im Ruhezustand ein minimaler Spalt zwischen der Beschichtungsoberfläche und den dagegen vorstehenden Kanten der Schaufelelemente gewährleistet sein. Die Toleranzen entstehen bei der Produktion der Gehäuse und der drehenden Teile sowie bei der Montage der Strömungsmaschinen, insbesondere Turbolader. Die Abweichungen der einzelnen Beschichtungsoberflächen von der idealen Oberfläche können durch eine beschichtungsabhebende Behandlung minimiert werden. Dazu muss aber das Gehäuse nach dem Beschichten in einer weiteren Bearbeitungsstation eingespannt und behandelt werden. Gegebenenfalls muss anhand der Vermessung der Schaufelaussenkanten und insbesondere des Gehäuses ermittelt werden, auf welche Berandungsfläche die Beschichtung abgetragen werden muss. Ohne Nachbearbeitung muss der Spalt größer gewählt werden. Wenn nun der Spalt größer ist als die, beim Übergang vom Ruhezustand zum Drehen im Betriebszustand auftretende, radiale Bewegung der vorstehenden Kanten der Schaufelelemente, so wird im Betriebszustand kein Abrieb erzielt und der Spalt ist nicht minimal bzw. die Leistung ist nicht optimal.

Gemäß der EP 799 367 B1 (DE 696 04 154 T2) sollen die Herstellungskosten verringert werden indem die abschleifbare Beschichtung lediglich einen relativ kleinen ringförmigen Abschnitt der gekrümmten Gehäuseschulter bei den Schaufelelementen des drehenden Teiles überdeckt. Auch bei dieser Lösung besteht ein Nachteil darin, dass ein den Toleranzen entsprechender Spalt in der Ruhestellung vorgesehen werden muss. Um den benötigten Ruhespalt zu gewährleisten, wird nur eine kleine Schichtdicke vorgesehen. Bei einer zu dicken Beschichtung würde das drehbare Teil aufgrund eines Kontaktes zwischen Beschichtung und Schaufelelementen im Betrieb nicht anlaufen. Zudem besteht bei schmalen Beschichtungsbereichen eine erhöhte Gefahr des ungewollten Absplitterns.

Die Aufgabe der vorliegenden Erfindung besteht nun darin, mit kleinem Aufwand eine abschleifbare Beschichtung und Rotoren mit Schaufelelementen so bereitzustellen, dass bei verschiedenen Betriebsarten ohne Anlaufprobleme eine maximale Leistungsfähigkeit von Strömungsmaschinen erzielt wird.

Diese Aufgabe wird durch die Merkmale der Ansprüche 1 und 7 gelöst. Die abhängigen Ansprüche beschreiben bevorzugte bzw. alternative Ausführungsformen.

Im Rahmen der vorliegenden Erfindung wurde erkannt, dass ein Ruhespalt, der immer ein sicheres Anlaufen des drehenden Teiles bei der Inbetriebnahme gewährleistet, aufgrund der Montagetoleranzen zu groß ist, um eine maximale Leistungsfähigkeit zu gewährleisten. Auf einen vorgegebenen Ruhespalt kann verzichtet werden, wenn das Abschleifen der Beschichtung durch das drehende Teil, bzw. die vorstehenden Kanten der Schaufelelemente, bei der Montage erfolgt. Wenn das Abschleifen bei der Montage erfolgt, so kann die Drehbarkeit des montierten drehenden Teiles mit einem Nullspalt, bzw. einem im Wesentlichen verschwindenden Ruhespalt, gewährleistet werden. Jede einzelne Strömungsmaschine bzw. jeder Turbolader weist im montierten Zustand unabhängig von der jeweiligen Relativlage (axial und radial) zwischen Gehäuse und drehendem Teil die gewünschte Drehbarkeit und den verschwindenden Spalt auf. Es müssen keine Fertigungs- und Montagetoleranzen durch einen unerwünschten Ruhespalt überspannt werden. Bei der Inbetriebnahme erfolgt ein weiteres Abschleifen der Beschichtung, welches bei der maximalen Drehzahl und insbesondere bei der maximalen Temperatur einen im Wesentlichen verschwindenden Betriebsspalt gewährleistet. Dieser im Wesentlichen verschwindende Betriebsspalt ist bei jeder erfindungsgemäß montierten Strömungsmaschine unabhängig von den Fertigungs- und Montagetoleranzen gewährleistet.

Die Beschichtung kann auch bei verschiedenen Strömungsmaschinen und/oder bei unterschiedlich geformten Gehäuseteilen mit einer Standardmächtigkeit aufgetragen werden. Der Aufwand für das Beschichten wird dadurch auch bei kleinen Serien mit unterschiedlichen Gehäusen minimal. Das beim Montieren durchgeführte Abschleifen mit dem drehenden Teil gewährleistet mit Sicherheit die gewünschte Spaltfreiheit bei einer unbehinderten Drehbarkeit. Dabei wird bei den verschiedenen Gehäusen unterschiedlich viel von der Beschichtung abgeschliffen. Dieses Abschleifen muss nicht in einem getrennten Arbeitsschritt durchgeführt werden, sondern kann bei einem ohnehin nötigen Montageschritt mit kleinem Aufwand erzielt werden. Das Abschleifen erfolgt vorzugsweise mit kleinen Drehzahlen und insbesondere unter kraft-überwachten Bedingungen, so dass Beschädigungen des drehenden Teiles, bzw. der Schaufelelemente des drehenden Teiles, ausgeschlossen werden können.

Die verwendeten Beschichtungsmaterialien werden entsprechend der Einsatzbedingungen der Strömungsmaschine gewählt. So kann bei Turboladern die Beschichtung eines Verdichtergehäuses aus anderem Material gebildet werden als die Beschichtung eines Turbinengehäuses.

Zum Herstellen eines erfindungsgemäßen Turbolader-Verdichters wird beispielsweise ein Verdichtergehäuse mittels Rauhdrehen in einer gewünschten Form bereitgestellt. Anschließend wird die Innenseite der Wandung des Verdichtergehäuses mit einer Abriebsbeschichtung beschichtet. Beim Montieren wird der Verdichter- bzw. Verdichterrotor drehend mit dem entsprechenden Gehäuseteil in Kontakt gebracht. Mit einer Bewegung des drehenden Verdichterrotors in Richtung der Drehachse wird der Verdichterrotor in die Endposition gebracht. Dabei wird die Beschichtung an der Innenseite des Gehäuses im Bereich des Verdichterrotors bzw. dessen Schaufeln abgeschliffen. Die Montagevorrichtung umfasst vorzugsweise eine Führung mit Drehlagerung und insbesondere einen Drehantrieb, so dass das drehende Teil im drehenden Zustand in die Montage-Endposition bewegt werden kann. Dabei kann das Abschleifen mit kleinem Aufwand und präzise durchgeführt werden.

Die Beschichtung wird beispielsweise mittels atmosphärischen Plasmaspritzens auf die Innenseite der Wandung des Gehäuses aufgebracht. Ein bevorzugtes Ausgangsmaterial zur Herstellung der Beschichtung mittels Plasmaspritzen ist ein Gemisch von Aluminium-Silizium und Polyester. Besonders vielseitig einsetzbar ist Beschichtungsmaterial Metco der Firma Sulzer, welches unter der Referenz NS 601 vertrieben wird.

Vorteilhafterweise werden die Beschichtungsparameter so gewählt, dass die Porosität der Beschichtung über die Beschichtungsdicke hinweg konstant ist. Entsprechend einer Ausführungsart der Erfindung besitzt die Beschichtung eine feinkörnige Struktur mit einer mittleren Korngrösse von ungefähr 4 Mikrometern, wie sie beispielsweise durch atmosphärisches Plasmaspritzen herstellbar ist.

Das bei der Montage durchgeführte Abschleifen hinterlässt charakteristische Schleifspuren oder Schleifkonturen der Schaufeln des Rotors, so dass bei der Untersuchung eines erfindungsgemäß montierten Turboladers vor der Inbetriebnahme anhand der Schleifspuren bzw. Schleifkonturen festgestellt werden kann, ob eine erfindungsgemäße Montage durchgeführt wurde. Nebst den Schleifspuren ist auch der verschwindend kleine Spalt, der bei jedem einzelnen Turbolader auftritt, ein klares Zeichen für die erfindungsgemässe Ausführung.

Das beschriebene Montageverfahren ist bei beliebigen Strömungsmaschinen mit einem von einem Gehäuseteil umgebenen Rotor einsetzbar, wenn zur Leistungsoptimierung eine Beschichtung des Gehäuseteiles vorgesehen ist. Von der Bezeichnung durchströmbares Gehäuse sollen sowohl Verdichtergehäuse als auch Turbinengehäuse umfasst sein. Entsprechend umfasst das Wort Rotor sowohl Verdichterrotoren als auch Turbinenrotoren. Weil die Temperaturänderungen bei einem Verdichterrotor nicht hoch sind, ergeben sich bei beschichteten Verdichtergehäusen nur wenige Probleme. Daher sind Ausführungsformen, bei denen lediglich der Verdichterrotor bei der Montage drehend mit dem Verdichtergehäuse in Kontakt gebracht wird, besonders vorteilhaft.

Die Zeichnungen erläutern die erfindungsgemäße Lösung anhand eines Ausführungsbeispieles. Dabei zeigen
- Fig. 1: und 2 perspektivische Darstellungen eines aufgeschnittenen Turboladers beim Aufsetzen des Verdichtergehäuses, und
- Fig. 3: eine schematische Darstellung der Montagevorrichtung

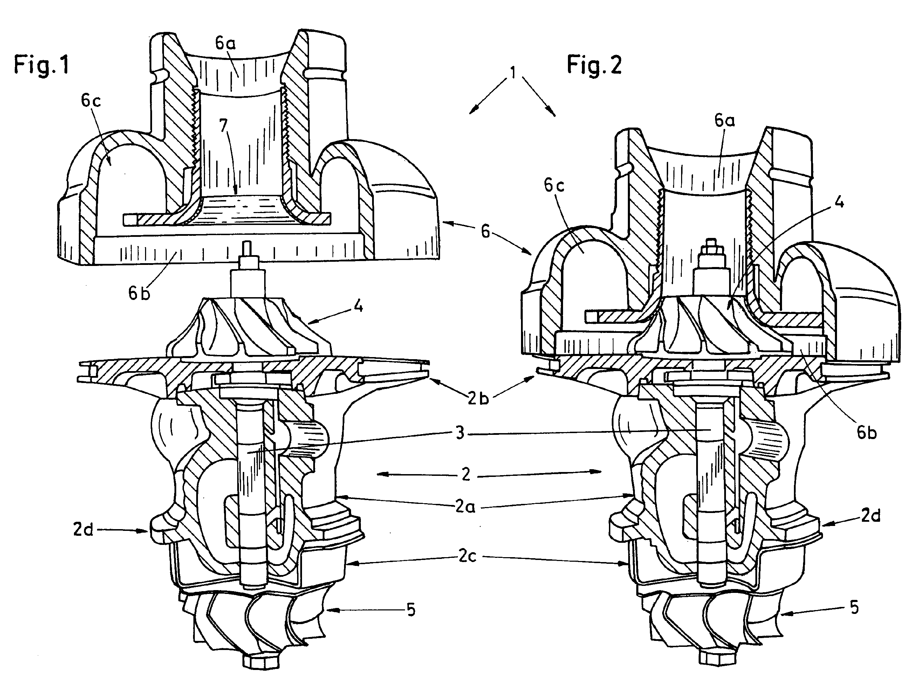

Gemäß Fig. 1 und 2 weist ein Turbolader 1 ein Lagergehäuse 2 auf, in dem eine Welle 3 drehbar gelagert ist. Am einen Endbereich der Welle 3 ist ein Verdichterrotor 4 an der Welle 3 befestigt und am anderen Endbereich ein Turbinenrotor 5. Das Lagergehäuse 2 umfasst ein mittleres Gehäuseteil 2a, einen ersten Endbereich 2b beim Verdichterrotor 4 und einen zweiten Endbereich 2c beim Turbinenrotor 5. Vom Lagergehäuse 2 steht radial ein Ringbereich 2d vor an dem das Lagergehäuse 2 eingespannt werden kann. Mit einer Einspannung des Lagergehäuses 2 können die Welle 3 sowie die Rotoren 4 und 5 in einer definierten Ausrichtung und Lage gehalten werden.

Beim Montieren wird nun ein Verdichtergehäuse 6 so ausgerichtet, dass dessen zentrale Achse im Wesentlichen auf der zentralen Achse der Welle 3 liegt. Bei der Bewegung des Verdichtergehäuses 6 gegen den Verdichterrotor 4 wird diese Ausrichtung beibehalten.

Fig. 2 zeigt eine Annäherungsposition bei der das Verdichtergehäuse 6 mit dem ersten Endbereich 2b in Eingriff gelangt. Gegebenenfalls wäre es möglich die Führung und Zentrierung bei der Montagebewegung des Verdichtergehäuses 6 durch die aneinander anliegenden Kontaktbereiche des Verdichtergehäuses 6 und des ersten Endbereiches 2b zu erzielen. Weil dabei aber die gewünschte Genauigkeit nicht oder nur mit großem Aufwand erzielbar wäre, ist es zweckmäßiger, wenn diese Montagebewegung von einer Führungsvorrichtung geführt wird. Dabei wird etwa das Verdichtergehäuse 6 an der Führungsvorrichtung gehalten und geführt gegen den Verdichterrotor 4 bewegt. Es versteht sich von selbst, dass die Führungsvorrichtung auch eine Bewegung des Verdichterrotors 4 bzw. des Lagergehäuses 2 gegen das Verdichtergehäuse 6 führen kann.

Wenn bei der Montagebewegung die Welle 3 beispielsweise mittels Drehen des Turbinenrotors 5 in Drehung versetzt wird, so kann der Verdichterrotor 4 im Kontakt zu einer Beschichtung 7 am Verdichtergehäuse 6 diese etwas abschleifen. Die Beschichtung 7 ist vorzugsweise zumindest im Kontaktbereich zwischen dem Verdichterrotor 4 und der dem Rotor 4 zugewandten Innenfläche des Verdichtergehäuses 6 am Verdichtergehäuse angeordnet. Wenn das Verdichtergehäuse den Endanschlag am Lagergehäuse 2 erreicht hat, ist die Beschichtung 7 soweit abgeschliffen, dass nach dem Befestigen des Verdichtergehäuses am Lagergehäuse, zwischen dem Verdichterrotor 4, bzw. den vorstehenden Kanten der Schaufelelemente des Verdichterrotors 4, und der Innenberandung des Verdichtergehäuses 6 im Wesentlichen ein Spalt mit verschwindender Spaltweite vorliegt. Der Verdichterrotor 4lässt sich aber ungehindert drehen.

Die Beschichtung kann mit einer großen Schichtdicke beispielsweise im Bereich von 0.5 bis 1.2mm, vorzugsweise mit im Wesentlichen 0.8mm aufgetragen werden. Weil nun bei jedem Exemplar eines Fertigungsloses ein individueller, an die jeweiligen Abweichungen angepasster und bei der endgültigen Montagelage beendeter, Abschleifschritt durchgeführt wird, kann für das gesamte Fertigungslos die exakt gleiche Dichtheit zwischen Verdichterrotor 4 und Verdichtergehäuse 6 gewährleistet werden. Selbst wenn die Achse des Rotors nicht zentrisch und/oder parallel zur Achse des Gehäuses ausgerichtet ist, wird diese Dichtheit erzielt, wobei dann die Dicke der abgeschliffenen Schicht der Beschichtung 7 in Umfangsrichtung nicht konstant ist.

Nach dem Montieren des Verdichtergehäuses 6 am Lagergehäuse 2 mit dem Verdichterrotor 4 ist der Rotor 4 so im Lagergehäuse 2 angeordnet, dass er im Betriebszustand Luft oder gegebenenfalls auch ein anderes Gasgemisch durch den zylindrischen, axial verlaufenden Ansaugkanal 6a ansaugt und durch einen radialen Kanalbereich 6b in einen weiterführenden Ringkanal 6c fördert. Die Kanäle 6a, 6b und 6c sind dabei auf der Innenseite des Verdichtergehäuses 6 angeordnet. Es versteht sich von selbst, dass die Gestaltung der Kanäle und des Rotors an die jeweilige Funktion angepasst ist. Die Beschichtung 7 ist bei jeder Anwendung bzw. Funktion so an der Innenfläche des jeweiligen Gehäuses angeordnet, dass die vorstehenden Kanten der Schaufelelemente des Rotors an die Beschichtung 7 anschließen. Auch wenn die Erfindung anhand eines Verdichters erläutert ist, sind von der Erfindung auch Turbinen umfasst. Besonders vorteilhaft wird die Erfindung im Bereich von Turboladern angewendet.

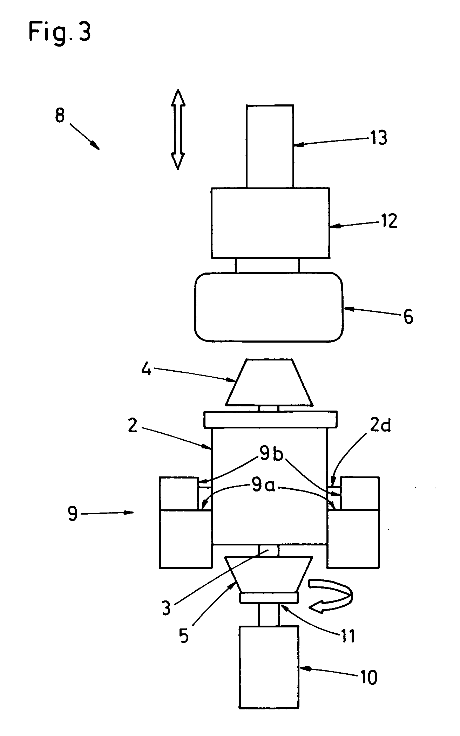

Fig. 3 zeigt eine Montagevorrichtung 8 mit einer ersten Einspannvorrichtung 9 zum Halten des Lagergehäuses 2. Um die Drehachse der Welle 3 sowie der beiden Rotoren 4 und 5 präzise auszurichten, umfasst die erste Einspannvorrichtung 9 beispielsweise mindestens drei präzise positionierte Auflageflächen 9a. Zur Zentrierung des Lagergehäuses 2 sind zudem Zentrierflächen 9b vorgesehen, die vorzugsweise zum Spannen und Lösen radial verstellbar sind. Die Auflageflächen 9a und die Zentrierflächen 9b wirken beispielsweise mit dem Ringbereich 2d zusammen.

Der Verdichterrotor 4 wird durch einen Antrieb in Drehung versetzt, wobei vorzugsweise der Turbinenrotor 5 angetrieben wird. Vorzugsweise aber umfasst die erste Einspannvorrichtung einen Antrieb 10, der über ein Kopplungsteil 11 mit dem Turbinenrotor 5 in Eingriff gebracht werden kann. Um Beschädigungen, insbesondere am Verdichterrotor, zu vermeiden, umfasst der Antrieb 10 vorzugsweise eine Belastungs-, insbesondere Drehmomentkontrolle. Es versteht sich von selbst, dass auch das Verdichtergehäuse 6 in Drehung versetzt werden könnte, was aber im Vergleich zum Drehen des drehbar gelagerten Verdichterrotors 4 mit zusätzlichem Aufwand verbunden wäre.

Das Verdichtergehäuse 6 ist bei einem Montageschritt vorzugsweise in einer zweiten Einspannvorrichtung 12 gehalten. Die zweite Einspannvorrichtung 12 gewährleistet eine an das von der ersten Einspannvorrichtung 9 gehaltene Lagergehäuse 2 angepasste Ausrichtung des Verdichtergehäuses 6. Um das Verdichtergehäuse 6 in der gewünschten Ausrichtung auf das Lagergehäuse 2 zu bewegen, wird vorzugsweise eine Führungsvorrichtung 13 mit der zweiten Einspannvorrichtung 12 verbunden. Wenn der Vorschub der Führungsvorrichtung genügend gross ist, gelangt der Verdichterrotor 4 mit der Beschichtung 7 an der Innenfläche des Verdichtergehäuses in Kontakt und schleift bis zum Erreichen der Montage-Endlage Beschichtungsmaterial vom Innern des Verdichtergehäuses 4 ab. Das Verdichtergehäuse 6 wird im Wesentlichen über eine Relativbewegung parallel zur Drehachse an den Verdichterrotor 4 geführt, wobei im Bewegungsbereich kurz vor dem Erreichen der Montageposition eine Beschichtungsschicht abgetragen wird.

## Patentansprüche

1. Montageverfahren zum Zusammenbauen einer Strömungsmaschine, insbesondere eines Turboladers (1), bei welchem Verfahren ein Rotor (4) in einem Lagergehäuse (2) drehbar gelagert und ein dem Rotor (4) zugewandtes durchströmbares Gehäuse (6) am Lagergehäuse (2) befestigt wird, wobei das durchströmbare Gehäuse (6) in einem dem Rotor (4) zugewandten Bereich der Innenfläche mit einer Beschichtung (7) versehen ist, **dadurch gekennzeichnet, dass** der Rotor (4) beim Zusammenbringen des Lagergehäuses (2) und des durchströmbaren Gehäuses (6) von der Beschichtung (7) des durchströmbaren Gehäuses (6) eine Schicht abschleift.

2. Montageverfahren nach Anspruch 1, **dadurch gekennzeichnet, dass** beim Abschleifen der Schicht der Rotor (4) gedreht wird.

3. Montageverfahren nach Anspruch 1 oder 2, **dadurch gekennzeichnet, dass** beim Abschleifen der Schicht das Lagergehäuse (2) und das durchströmbare Gehäuse (6) von einer Montagevorrichtung (8) gehalten werden, wobei eine Führungsvorrichtung (13) gewährleistet, dass das durchströmbare Gehäuse (6) mit dem Rotor (4) im Wesentlichen über eine Relativbewegung parallel zur Drehachse zusammengeführt werden.

4. Montageverfahren nach Anspruch 2 oder 3, **dadurch gekennzeichnet, dass** der Rotor (4) von einem Antrieb (10) gedreht wird.

5. Montageverfahren nach Anspruch 4, **dadurch gekennzeichnet, dass** beim Antrieb (10) eine Drehmomentüberwachung durchgeführt wird.

6. Montageverfahren nach einem der Ansprüche 1 bis 5, **dadurch gekennzeichnet, dass** das durchströmbare Gehäuse (6) ein Verdichtergehäuse (6) und der Rotor (4) ein Verdichterrotor (4) ist.

7. Strömungsmaschine, insbesondere Turbolader (1), mit einem in einem Lagergehäuse (2) drehbar gelagerten Rotor (4) und einem dem Rotor (4) zugewandten durchströmbaren Gehäuse (6), welches am Lagergehäuse (2) befestigt ist, wobei das durchströmbare Gehäuse (6) in einem dem Rotor (4) zugewandten Bereich der Innenfläche mit einer Beschichtung versehen ist, **dadurch gekennzeichnet, dass** beim Montieren der Strömungsmaschine, bzw. des Turboladers (1), ein Montageverfahren gemäß einem der vorangehenden Patentansprüche durchgeführt wurde.
